# EUROPEAN PATENT SPECIFICATION

(11) **EP 4 536 958 B1**
(45) Date of publication and mention of the grant of the patent: **14.10.2026**
(21) Application number: 23732377.9
(22) Date of filing: 08.06.2023
(51) Int. Cl.: F03D 1/06

(54) **A WIND TURBINE**
WINDTURBINE
ÉOLIENNE

(30) Priority: 10.06.2022 DK PA202270309
(43) Date of publication of application: 16.04.2025
(73) Proprietor: VESTAS WIND SYSTEMS A/S, 8200 Aarhus N (DK)
(72) Inventor: FAJAR, Mohammed, 8200 Aarhus N (DK); MARTIN, Nils, 8200 Aarhus N (DK); RUDOLF, Robert, 8200 Aarhus N (DK); HVEJSEL, Christian Frier, 8200 Aarhus N (DK); STEFFENSEN, Søren, 8200 Aarhus N (DK)
(74) Representative: Vestas Patents Department
(86) International application number: PCT/DK2023/050141
(87) International publication number: WO 2023/237169

(56) References cited:
- EP-B1- 2 142 795
- CN-A- 106 089 573
- CN-U- 201 810 482
- US-A1- 2009 208 337

## Description

### FIELD OF THE INVENTION

The present invention relates to a pitch controlled wind turbine, and a method of manufacturing a wind turbine blade of a wind turbine.

### BACKGROUND OF THE INVENTION

Wind turbine blades are subject to various loads, such as aerodynamic loads generated by the wind. These may include air pressure on the wind turbine blades, and changing wind speed and direction. The wind turbine will also be subject to the dead weight of the wind turbine blade itself.

There is a continued drive to produce larger wind turbine blades, due to the increased energy production that is produced. Yet, as the size of wind turbine blades continues to increase, the loads on the wind turbine blades also continue to increase. The increased loads often require further reinforcement of the blades, however this reinforcement further increases the weight of the blades, with a subsequent further increase in the loads acting on the blades.

CN201810482U is a relevant example of prior art.

### SUMMARY OF THE INVENTION

A first aspect of the invention provides a pitch controlled wind turbine comprising a tower, a nacelle mounted on the tower, a hub mounted rotatably on the nacelle, and at least three wind turbine blades, wherein each wind turbine blade extends between a root end connected to the hub via a pitch mechanism, and a tip end; the wind turbine further comprising at least three blade connecting members, each blade connecting member extending from a connection point on one wind turbine blade towards a connection point on a neighbouring wind turbine blade, the connecting points each located at a connection region of a respective blade; and each wind turbine blade comprising a spar cap extending in a blade spanwise outboard direction between the root end and the tip end, and a reinforcing member having an anchor end and a connection end, the connection end having the connection point, the reinforcing member extending continuously from the connection point to the anchor end which overlaps a portion of the spar cap so as to transfer load between the spar cap and the respective connecting member.

The anchor end may overlap the portion of the spar cap outboard of the connection point.

The reinforcing member may be integral with the spar cap. The reinforcing member may be co-bonded with the spar cap.

The reinforcing member may include a fibre-reinforced composite material.

A majority of the fibres of the fibre-reinforced composite material may be oriented generally towards the blade spanwise direction. A majority of the fibres may be oriented within 20 degrees of the spanwise direction of the blade.

The reinforcing member may extend around a portion of the connection point. Fibres of the reinforcing member may be continuous around the portion of the connection point.

A width of the reinforcing member in a chordwise direction between a leading edge and a trailing edge of the blade may increase outboard from the connection point up to an inboard edge of the anchor end.

The reinforcing member may extend from the connection end and overlap an inner side of the spar cap and an outer side of the spar cap.

The spar cap may have a longitudinal axis which deviates in a blade thickness direction on either side of the reinforcing member.

The spar cap may be continuous between the root end and the tip end.

The connection region may have a leading edge forward of a leading edge of the blade inboard of the connection region and forward of a leading edge of the blade outboard of the connection region. The connection point may be located forward of the leading edge of the blade inboard of the connection region and forward of the leading edge outboard of the connection region

The leading edge of the connection region may be smoothly blended into the blade leading edge outboard of the connection region.

The leading edge of the connection point may be located on a pressure side of the blade.

Each connection point may comprise a connector. The connector may be embedded in the reinforcing member.

The reinforcing member may include a core material. The core material may change thickness between the connection end and the anchor end so as to adapt the thickness of the reinforcing member.

A thickness of the core material may taper away from the connection end so as to reduce in thickness towards the anchor end.

Each connection point may comprise a bearing structure configured to provide freedom of movement of the connecting member about at least one axis.

A first connecting member and a second connecting member may extend from the connection point.

The wind turbine may be an upwind wind turbine.

A second aspect of the invention provides a method of manufacturing a wind turbine blade, comprising: providing a blade mould, the blade mould shaped to form a blade having a connection region; laying a reinforcing member into the blade mould at the connection region; placing a spar cap into the mould and on top of the reinforcing member; placing a connector into the mould at a connection end of the reinforcing member such that the reinforcing member extends continuously from the connector to an anchor end of the reinforcing member, wherein the anchor end overlaps a portion of the spar cap, and wherein the connector is for coupling to a corresponding connector on a neighbouring wind turbine blade via a connecting member.

The reinforcing member may comprise a first portion and a second portion; the method comprising placing the spar cap and connector into the mould and onto the first portion, and folding the second portion of the reinforcing member over the spar cap and connector such that the reinforcing member wraps around the connector with the first and second portions of the reinforcing member placed on opposite sides of the spar cap.

Prior to folding the second portion of the reinforcing member over the spar cap and connector, the method may comprise placing a core material onto the first portion of the reinforcing member and folding the second portion of the reinforcing member over the spar cap and connector, wherein the core material extends from the connector towards the spar cap.

The method of the second aspect may be for manufacturing the blade of a wind turbine of the first aspect.

### BRIEF DESCRIPTION OF THE DRAWINGS

Embodiments of the invention will now be described with reference to the accompanying drawings, in which:
Figure 1 shows a front view of a wind turbine according to a first example;
Figure 2 shows a side view of the wind turbine;
Figure 3 shows a wind turbine according to a second example;
Figure 4 shows a wind turbine blade;
Figure 5 shows a connection region of a wind turbine blade from which connecting members extend;
Figure 6 shows a cross-section of the blade;
Figure 7 shows a reinforcing member extending from a connection point to the spar cap of the blade;
Figure 8 shows a close-up view of the reinforcing member of Figure 8;
Figure 9 shows a cross-section, A-A, of the spar cap at the position the reinforcing member overlaps the spar cap;
Figure 10 shows a cross-section, B-B, of the reinforcing member;
Figure 11 shows a cross-section, C-C, of the reinforcing member at the connection point;
Figure 12 shows a connector of the connection region;
Figure 13 shows a cross-section of the connector;
Figure 14 shows a blade mould;
Figure 15 shows a reinforcing member laid into the mould;
Figure 16 shows a spar cap laid into the mould;
Figure 17 shows a core material placed into the mould;
Figure 18 shows a portion of the reinforcing member folded over the core material and reinforcing member;
Figure 19 shows an alternative arrangement with two reinforcing members;
Figure 20 shows a plan view of the reinforcing members of Figure 19;
Figure 21 shows an alternative example of a connector;
Figure 22 shows a cross-section of the connector of Figure 21.

### DETAILED DESCRIPTION OF EMBODIMENT(S)

In this specification, terms such as leading edge, trailing edge, pressure surface, suction surface, thickness, and chord are used. While these terms are well known and understood to a person skilled in the art, definitions are given below for the avoidance of doubt.

The term leading edge is used to refer to an edge of the blade which will be at the front of the blade as the blade rotates in the normal rotation direction of the wind turbine rotor.

The term trailing edge is used to refer to an edge of a wind turbine blade which will be at the back of the blade as the blade rotates in the normal rotation direction of the wind turbine rotor.

The chord of a blade is the straight line distance from the leading edge to the trailing edge in a given cross section perpendicular to the blade spanwise direction. The term chordwise is used to refer to a direction from the leading edge to the trailing edge, or vice versa.

A pressure surface (or windward surface) of a wind turbine blade is a surface between the leading edge and the trailing edge, which, when the blade is in use, has a higher pressure than a suction surface of the blade.

A suction surface (or leeward surface) of a wind turbine blade is a surface between the leading edge and the trailing edge, which will have a lower pressure acting upon it than that of a pressure surface, when the blade is in use.

The thickness of a wind turbine blade is measured perpendicularly to the chord of the blade and is the greatest distance between the pressure surface and the suction surface in a given cross section perpendicular to the blade spanwise direction.

The term spanwise is used to refer to a direction from a root end of a wind turbine blade to a tip end of the blade, or vice versa. When a wind turbine blade is mounted on a wind turbine hub, the spanwise and radial directions will be substantially the same.

The term spar cap is used to refer to a longitudinal, generally spanwise extending, reinforcing element of the blade. The spar cap may be embedded in the blade shell or may be attached to the blade shell. The spar caps of the windward and leeward sides of the blade may be joined by one or more shear webs extending through the interior hollow space of the blade. The blade may have more than one spar cap on each of the windward and leeward sides of the blade. The spar cap may form part of a longitudinal reinforcing spar or support member of the blade. In particular, the spar caps may form part of the load bearing structure extending in the longitudinal direction that carries the flap-wise bending loads of the blade.

The term outboard refers to a radial (blade spanwise) direction from the hub of the blade towards the tip end of the blade. The term inboard refers to a radial direction from the tip end of the blade towards the hub.

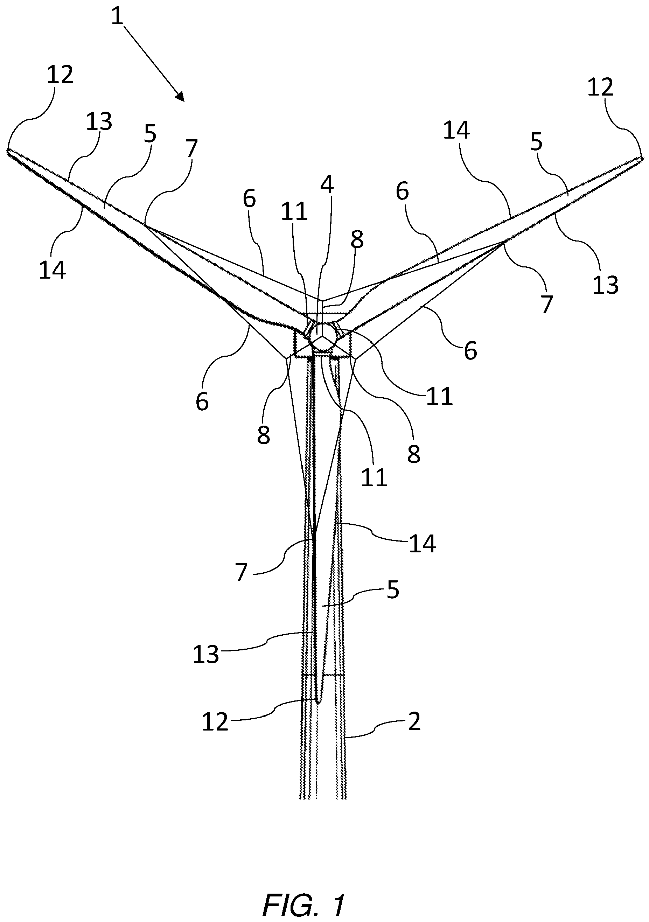

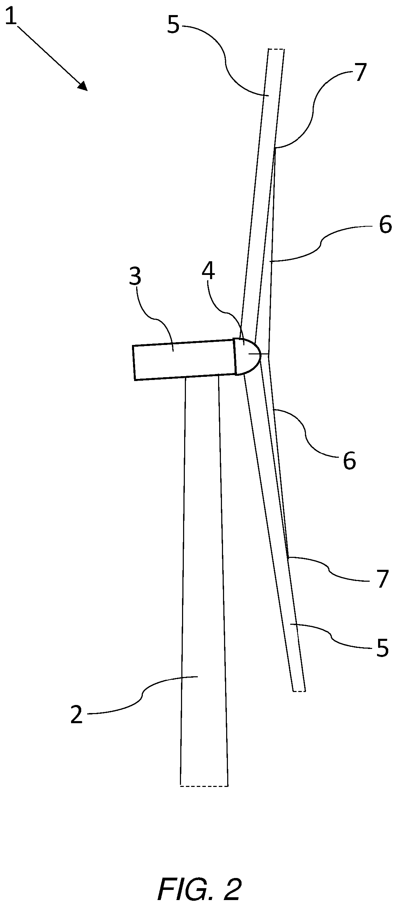

Figures 1 and 2 show a pitch controlled wind turbine 1 according to a first example. Figure 1 is a front view of the wind turbine 1, and Figure 2 is a side view of the wind turbine 1. The wind turbine 1 comprises a tower 2 and a nacelle 3 mounted on the tower 2. A hub 4 is mounted rotatably on the nacelle 3, and carries three wind turbine blades 5 projecting outwardly from the nacelle 3. While the example shown in Figures 1 and 2 has three blades 5, it will be appreciated that other numbers of blades 5 are possible.

When wind blows against the wind turbine 1, the wind turbine blades 5 generate a lift force which causes a generator (not shown) within the nacelle 3 to generate electrical energy.

It will be appreciated that the wind turbine 1 depicted may be any suitable type of wind turbine 1. The wind turbine 1 shown is an upwind wind turbine, although it will be appreciated the wind turbine 1 may be a downwind wind turbine. The wind turbine 1 may be an onshore wind turbine such that the foundation is embedded in the ground, or the wind turbine 1 may be an offshore installation in which case the foundation would be provided by a suitable marine platform.

Three blade connecting members 6 interconnect neighbouring wind turbine blades 5 between connecting points 7 on the wind turbine blades 5. The connecting members 6 are cables, e.g. steel cables. A pre-tension member 8 extends between one of each of the blade connecting members 6 and a common point arranged at or adjacent the hub 4. In the example shown in Figures 1 and 2, the pre-tension members 8 extend to the hub 4. The pre-tension members 8 are configured to provide pre-tension in the blade connecting members 6.

The pre-tensioned blade connecting members 6 cause the wind turbine blades 5 to mutually support each other, in the sense that loads on the wind turbine blades 5, in particular edgewise loads and flapwise loads, are 'shared' among the wind turbine blades 5.

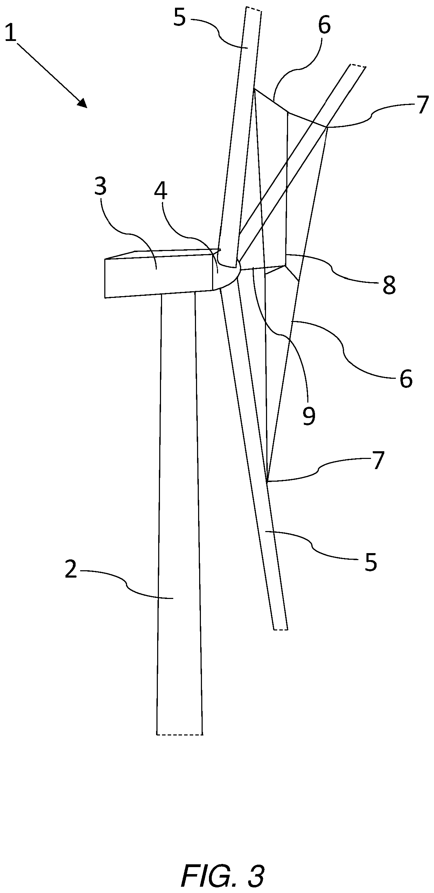

Figure 3 is a side view of a pitch controlled wind turbine 1 according to a second example. The wind turbine 1 of Figure 3 is similar to the wind turbine 1 of Figures 1 and 2, and therefore likewise features will not be described in detail here.

The pre-tension members 8 may or may not be connected directly to the hub 4. The pre-tension members 8 may be connected, such as shown in Figure 3, adjacent the hub 4 and to a hub member 9 which extends from the hub 4 substantially along a direction defined by a rotational axis of the hub 4. As a result, the connection point of the pre-tension members 8 is further from the hub 4 than the example of Figures 1 and 2, and thereby further from the positions where the wind turbine blades 5 are connected to the hub 4. This has the consequence that the pre-tension members 8 may also pull the blade connecting members 6 away from the hub 4 and away from the tower 2. This may also cause the wind turbine blades 5 to be pulled in this direction, thereby further reducing edgewise and flapwise loads at the root of the wind turbine blades 5 and securing tower clearance, similar to what is obtained when a coning angle is introduced.

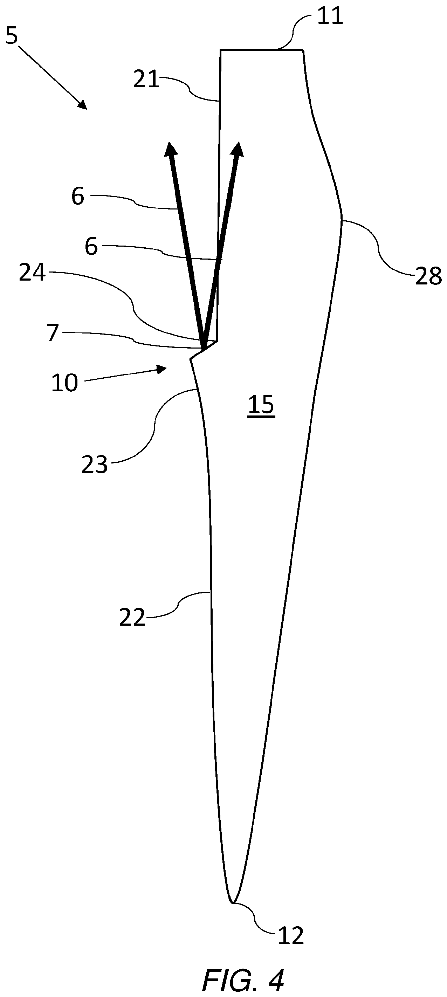

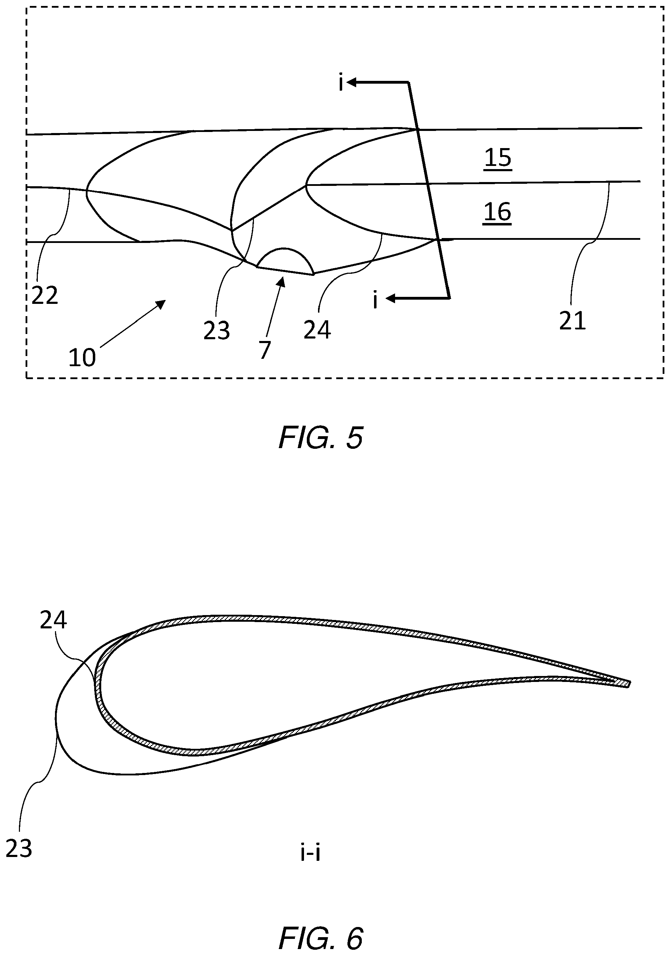

The wind turbine blades 5 have a root end 11 proximal to the hub 4, adapted to be connected to the hub 4 via a pitch mechanism, and a tip end 12 distal from the hub 4. The blades 5 include a leading edge 13 and a trailing edge 14 that extend between the respective root end 11 and tip end 12. The blades 5 include a suction side 15 and a pressure side 16 (See Figures 4 and 5). A thickness dimension of the blade 5 extends between the suction side 15 and the pressure side 16.

Each blade 5 may have a cross section which has substantially circular profile near the root end 11. The blade 5 may transition from a circular profile to an aerofoil profile moving from the root end 11 of the blade 5 outboard. The blade 5 may comprise a "shoulder" 28 outboard of the root end 11, which is the widest part of the blade where the blade 5 has its maximum chord. The blade 5 may have an aerofoil profile of progressively decreasing thickness in an outboard portion of the blade 5. The progressively decreasing thickness may extend from the shoulder 28 to the tip end 12.

In the example shown in Figure 4, the connecting point 7 is located at approximately 40% of the blade length in the radial direction from the root end 11. Although it will be appreciated that the connecting point 7 may be at any position along the blade 5. The connecting point 7 may be between 10% and 60% of the length of the wind turbine blade 5 from the root end 11 to the tip end 12 in the radial direction but is preferably radially inboard of 50% of the length of the wind turbine blade 5 from the root end 11 to the tip end 12, and more preferably radially inboard of 45% of the length of the wind turbine blade 5 from the root end 11 to the tip end 12.

The connecting point 7 is located at a connection region 10 of the blade 5. The connecting region 10 may extend forward of the leading edge 21 of the blade 5 inboard of the connecting region 10 and the leading edge 22 of the blade 5 outboard of the connecting region 10. The connection region 10 is such that the blade 5 may be continuous from the root end 11 to the tip end 12.

In the example shown in Figure 4, the leading edge 23 of the connection region 10 smoothly blends into the leading edge 22 of the blade 5 outboard of the connection region 10. For example, the leading edge 23 of the connection region 10 may curve from the connection point 7 to the leading edge 22 of the blade 5 outboard of the connection region 10. Although it will be appreciated that in other examples the leading edge 23 of the connection region 10 may sharply transition into the leading edge 22 of the blade 5 outboard of the connection region 10, for example forming a vertex between the leading edges 22, 23.

The leading edge 21 inboard of the leading edge 23 of the connection region 10 is shown to sharply transition into the leading edge 23 of the connection region 10, with a vertex 24 formed between the leading edges 21, 23. Providing a smooth transition may reduce stress concentrations, whereas providing a generally sharp transition may provide additional clearance for the connecting member 6 or other components. Although it will be appreciated that the leading edge 23 of the connection region 10 may smoothly blend into the leading edge 21 of the blade 5 inboard of the connection region 10. For example, the leading edge 23 of the connection region 10 may curve from the connection point 7 to the leading edge 21 of the blade 5 inboard of the connection region 10.

Similarly, the connection region 10 may extend outwards from the blade 5 so as to increase the local thickness of the blade 5 at the connection region 10 relative to the thickness of the blade 5 inboard of the connection region 10 and outboard of the connection region 10. This is shown in the perspective view of Figure 5, and the spanwise view in Figure 6 taken at the cross-section i-i indicated in Figure 5. The connection points 7 may be arranged at a position where a thickness-to-chord ratio of the wind turbine blade 5 is between 20% and 50%. The increase in thickness of the blade 5 may be more pronounced on the pressure side 16 of the blade 5, such that the leading edge of the connection region extends outwards from the blade on a pressure side of the respective blade.

The thickness of the blade 5 at the connection region 10 may smoothly transition to the portion of the blade 5 outboard of the connection region 10 and may sharply transition to the portion of the blade 5 inboard of the connection region 10, such as shown in Figure 5. Providing a smooth transition may reduce stress concentrations, whereas providing a generally sharp transition may provide additional clearance for the connecting member 6 or other components. Although it will be appreciated that change in thickness at either end of the connection region 10 may be a smooth transition or sharp transition.

Extending the connection region 10 so that the leading edge 23 of the connection region 10 extends forward of the inboard and outboard leading edges 21, 22 of the blade 5 provides additional clearance for the connecting members 6 as the wind turbine blades 5 rotate with the hub 4 about the nacelle, thereby increasing the range of motion of the blades 5 relative to the connecting members 6. Similarly, increasing the thickness of the blade 5 at the connection region 10, and more particularly providing a more pronounced increase in thickness on the pressure side 16 of the blade 5, provides additional clearance for the connecting members 6.

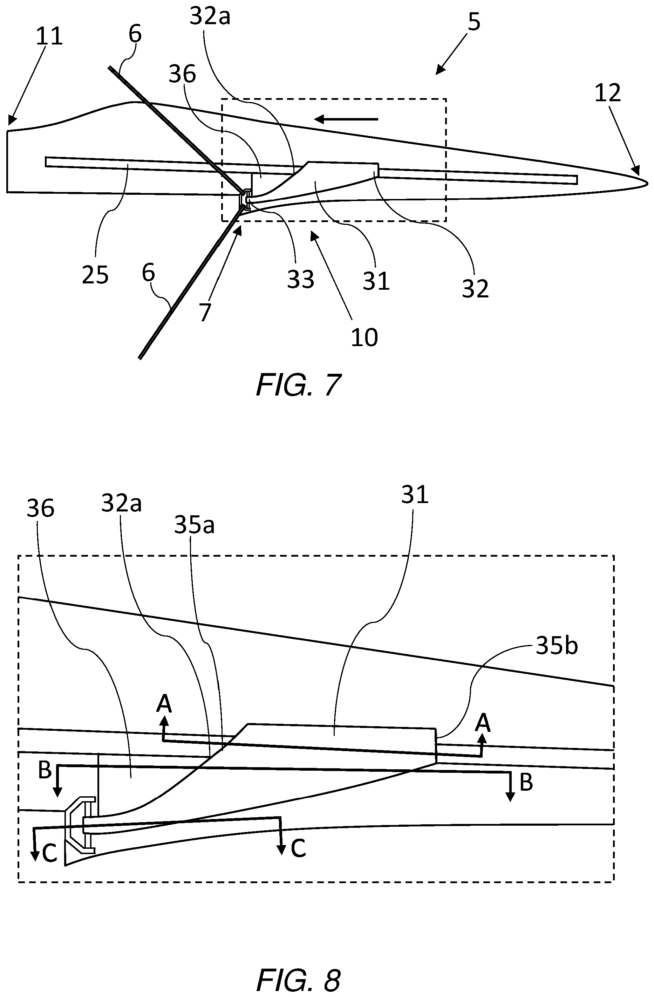

As shown in Figure 7, each wind turbine blade 5 has a spar cap 25 that extends in a spanwise direction of the blade 5 between the root end 11 and the tip end 12. The spar cap 25 may be continuous across the connection region 10. The spar cap 25 may be continuous along substantially its entire length between the root end 11 and the tip end 12.

A reinforcing member 31 extends from the connection point 7 to the spar cap 25. In particular, the reinforcing member 31 has an anchor end 32 that overlaps a portion of the spar cap 25, and a connection end 33 having the connection point 7, such that the reinforcing member 31 extends continuously from the connection point 7 to the anchor end 32 so as to transfer load between the spar cap 25 and the respective connecting member 6.

The anchor end 32 preferably overlaps the spar cap 25 at a location outboard of the connection point 7, such as shown in Figure 7, so that the reinforcing member 31 extends outboard to oppose the loads on the connecting members 6 that are directed generally inboard. However, it will be understood that the anchor end 32 may overlap the spar cap 25 at any spanwise position, including inboard of the connection point 7.

The reinforcing member 31 may be formed of any suitable material, such as metal, although preferably includes fibre-reinforced composite material. The fibre-reinforced composite material may include glass and/or carbon fibres. The fibre-reinforced composite materials may be formed from pre-preg or dry fibre preforms.

Fibre reinforced composite materials have an increased stiffness when the fibres are oriented in the load direction. In the present case, the majority of the fibres of the fibre-reinforced composite material may be oriented generally towards the blade spanwise direction. Preferably, the majority of the fibres are oriented within 20 degrees of the spanwise direction of the blade 5. A majority may refer to more than 50% of the fibres being oriented in the spanwise direction of the blade 5, although preferably more than 80% of the fibres are oriented in the spanwise direction of the blade 5.

The reinforcing member 31 may extend from the connection point 7 to a spar cap 25 on the pressure side 16 of the blade 5. The reinforcing member 31 may extend from the connection point 7 to the spar cap 25 only on a pressure side 16 of the blade 5, such that the reinforcing member 31 does not extend to a spar cap 25 on the suction side 15 of the blade 5.

The width of the reinforcing member 31 may increase from the connection end 33 to the anchor end 32. The width of the reinforcing member 31 may be measured in the chordwise direction of the blade 5, such that the width of the reinforcing member 31 increases in the spanwise direction of the blade 5. As shown most clearly in Figure 8, the width of the reinforcing member 31 in the chordwise direction may increase outboard from the connection point 7 up to an inboard edge 32a of the anchor end 32.

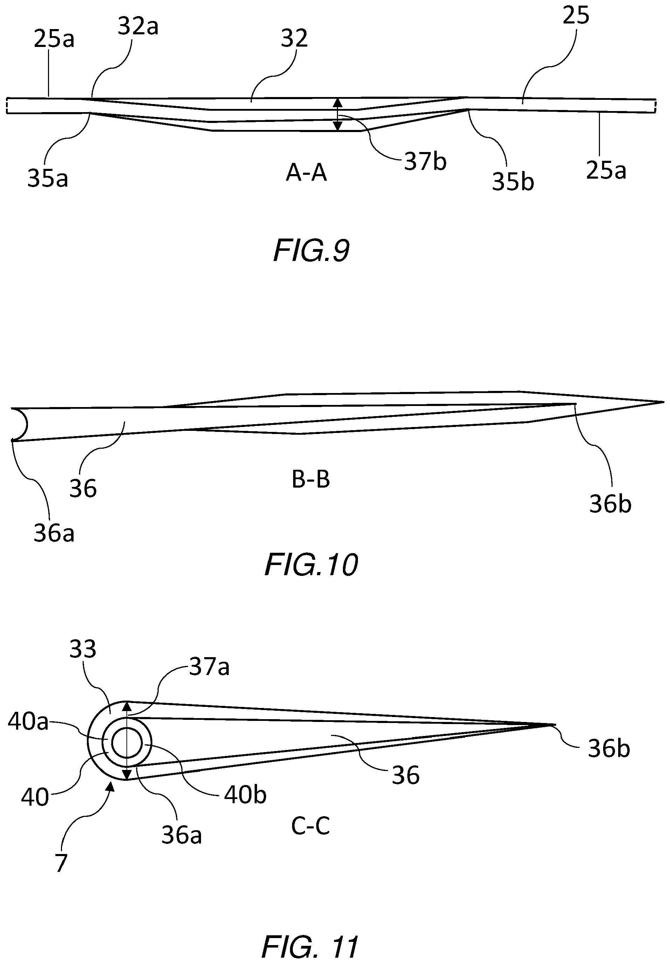

As previously mentioned, the anchor end 32 of the reinforcing member 31 overlaps a portion of the spar cap 25. The anchor end 32 may overlap the inner side 25a of the spar cap 25 (i.e. the side of the spar cap 25 distal from an outer aerodynamic surface of the blade 5) and/or the outer side 25b of the spar cap 25 (i.e. the side of the spar cap 25 adjacent an outer aerodynamic surface of the blade 5). Overlapping the spar cap 25 improves the load transfer between the anchor end 32 of the reinforcing member 31 and the spar cap 25 due to the large contact area. In the example shown in Figure 9, the reinforcing member 31 overlaps an inner side 25a of the spar cap 25 and an outer side 25b of the spar cap 25 such that, for a given spanwise extent, the reinforcing member 31 is attached to a greater surface area of the spar cap 25 than is possible with overlap of one or the other of the inner and outer sides 25a, 25b. To accommodate the reinforcing member 31, at the position the reinforcing member 31 overlaps the spar cap 25, the spar cap 25 may have a longitudinal axis which deviates in a blade thickness direction on either side of the reinforcing member 31. Figure 9 shows the spar cap 25 deviating towards an outer surface of the blade 5. This may be preferable to maintain the blade outer aerodynamic profile. The spar cap 25 may deviate adjacent an inboard end 35a of the anchor end 32 and deviate adjacent an outboard end 35b of the anchor end 32. It will be understood that the spar cap 25 may similarly deviate in examples in which the anchor end 32 overlaps the outer side 25a of the spar cap 25 and/or the outer side 25b of the spar cap 25.

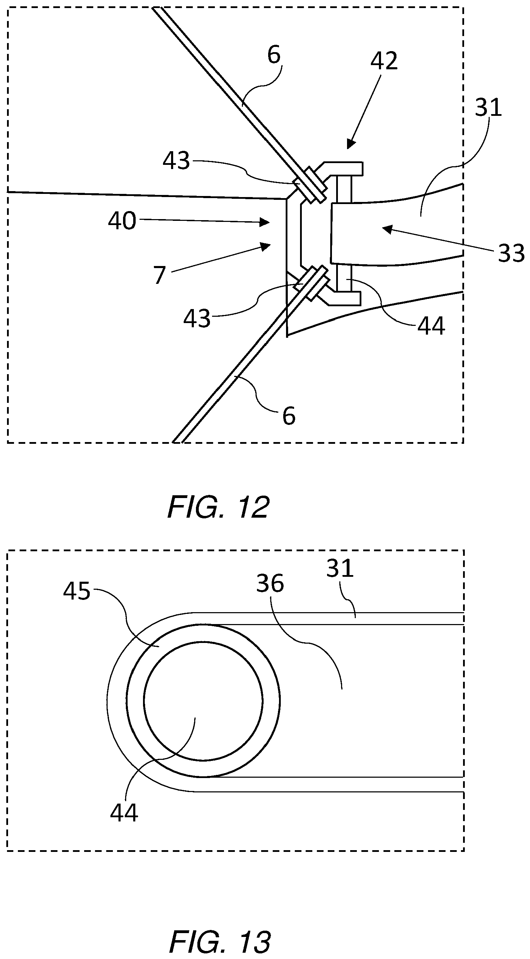

The thickness of the reinforcing member 31 may vary between the connection point 7 at the connection end 33 and the anchor end 32. As will be apparent from Figures 9, 10 & 11, the thickness may vary from a first thickness 37a adjacent the connection end 33, where the fibre reinforced composite material extends either side of a connector 40 of the connection point 7 (as will be discussed in further detail in relation to Figures 12 and 13) to a second thickness 37b adjacent the anchor end 32, where the fibre reinforced composite material extends to the spar cap 25. The first thickness 37a may be greater than the second thickness 37b. The relative change in thickness may, at least in part, account for the difference in thickness between the connector 40 at the connection end 33 and the thickness of the spar cap 25 at the anchor end 32.

The reinforcing member 31 may include a core material 36. The core material 36 may extend from the connection end 33 towards the anchor end 32. The core material 36 may reduce the quantity of fibre reinforced composite material required for the reinforcing member 31. In particular, the core material 36 may help transition from the thickness at the connection end 33 to the thickness at the anchor end 32. The core 36 may reduce in thickness, in the spanwise direction of the blade 5, between an inboard end 36a and an outboard end 36b, such as shown in Figures 10 and 11. The thickness of the core material 36 may taper away from the connection end 33 so as to reduce in thickness towards the anchor end 32, as is apparent when comparing Figures 10 and 11.

The use of a core 36 may reduce the weight of the reinforcing member 31, for example the core material 36 may be lighter than the fibre reinforced composite material. The core material 36 may be a foam. The core material 36 may form a supporting structure for the fibre reinforce composite material of the reinforcing member 31, so as to help keep the fibres of the fibre reinforcing material generally straight, or at least avoid having sharp angles that may reduce the load bearing performance of the fibre reinforced composite material.

The connector 40 may be embedded in the reinforcing member 31. The reinforcing member 31 may extend around a portion of the connection point 7. The fibre reinforced composite material may extend around a portion of the connection point 7 with the fibres of the reinforcing member 31 continuous around the portion of the connection point 7. As the reinforcing member 31 wraps around the connection point 7, the width of the reinforcing member 31 at the connection point 7 that contacts the connector 40 may be reduced, in comparison to the reinforcing member 31 not wrapping around the connection point 7, due to the increased load bearing capacity of continuous fibres.

The fibre reinforced composite material of the reinforcing member 31 may contact an inboard portion 40a of the connector 40 and not an outboard portion 40b of the connector 40, for example as shown in Figure 11, such that the fibre reinforced composite material contacts a semi-cylindrical inboard portion of the connector 40. However, it will be appreciated that the fibre reinforced composite material of the reinforcing member 31 may contact the outboard portion 40b of the connector 40, or other portion of the connector 40, depending on the position of the connection end 33 relative to the anchor end 32.

As previously mentioned, neighbouring wind turbines blades 5 interconnect via blade connecting members 6 that extend from a connection point 7 on one wind turbine blade 5 towards a connection 7 point on a neighbouring wind turbine blade 5. Each connection point 7 includes a connector 40 from which the one or more connecting members 6 extend. The blade connecting member 6 may extend from a connection point 7 on one wind turbine blade 5 towards a connection 7 point on a neighbouring wind turbine blade 5.

The connector 40 may be rigidly connected to the connecting members 6 and/or the reinforcing member 31. Alternatively, the connection point 7, and in particular the connector 40 of the connection point 7, may include a bearing structure 42 that attaches to the connecting member(s) 6 and provides freedom of movement of the respective connecting member 6 about at least one axis. In this manner, the connecting members 6 may not be rigidly fixed to reinforcing member 31 at the connection point 7.

The bearing structure 42 may include a coupling element 44 that extends through the connection end 33 of the reinforcing member 31. A bushing 45 may be positioned between the coupling element 44 and the reinforcing member 31, such as shown in Figure 13, with the bushing 45 providing for rotational movement of the coupling element 44 about its longitudinal axis relative to the reinforcing member 31.

The bearing structure 42 may include a bearing 43 to which the, or each, connecting member 6 attaches. The bearing 43 may provide freedom of movement about two orthogonal directions. The bearing 43 may be a spherical plain bearing 43. Each connecting member6 may connect to a respective bearing 43, such as shown in Figure 12.

The method of manufacturing a wind turbine blade 5 will now be described.

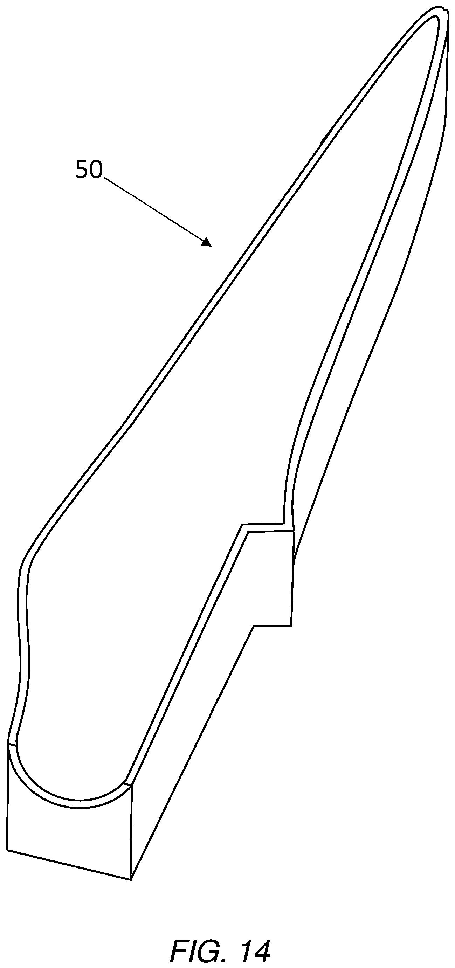

A half-shell of the wind turbine blade 5 is manufactured in a blade mould 50. Figure 14 shows a blade mould 50 for forming the full length of a pressure side 16 of a blade 5.

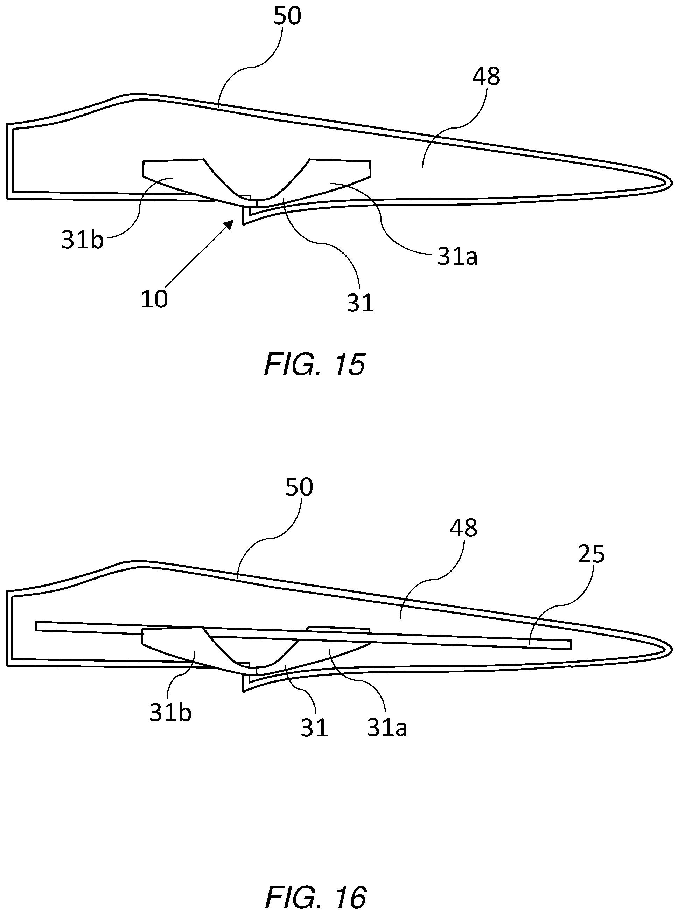

Layers of fibre-reinforced material of the blade skin 48 may be laid in the mould 50. A reinforcing member 31 is then laid in the blade mould 50 at the connection region 10. The reinforcing member 31 may comprise a first portion 31a and a second portion 31b, with only the first portion 31a laid at the connection region, such as shown in Figure 15. The second portion 31a may extend inboard from the first portion 31b, such that the second portion is inboard of the connection region 10.

The reinforcing member 31 may be provided as layers of fibrous material, such as dry glass fibres or pre-preg glass fibres.

A spar cap 25 is subsequently added into the mould 50 on top of the reinforcing member 31 so as to overlap the anchor end 32 of the reinforcing member 31. The spar cap 25 may be laid on top of only a portion of the reinforcing member 31, for example the spar cap 25 may be placed on top of the first portion 31a of the reinforcing member 31 and not the second portion 31b of the reinforcing member, such as shown in Figure 16.

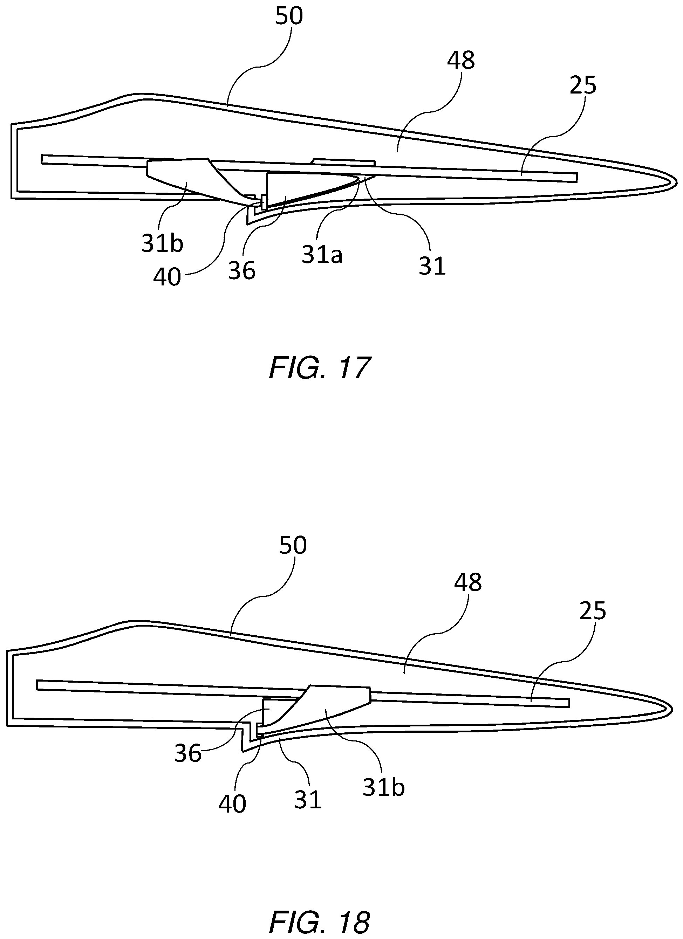

The core material 36 may be placed onto at least a portion of the reinforcing member 31. The core material 36 may be placed onto the first portion 31a of the reinforcing member 31, such as shown in Figure 17.

A connector 40 is placed into the mould 50 at the connection end 33 of the reinforcing member 31, such that at least a portion of the reinforcing member 31 extends continuously from the connector 40 to the anchor end 32 of the reinforcing member 31. The core material 36 may extend from the connector 40 towards the spar cap 25.

The second portion 31b of the reinforcing member 31 may be folded over the connector 40 and spar cap 25 as shown in Figure 18. In this manner, the first and second portions 31a, 31b of the reinforcing member 31 may be placed on opposite sides of the spar cap 25 and the reinforcing member 31 may wrap around the connector 40, with the first and second portions 31a, 31b of the reinforcing member 31 connected at an inboard portion 40a of the connector 40 and extending either side of the connector 40.

The first portion 31a and the second portion 31b of the reinforcing member 31 may have substantially the same size and shape such that the second portion 31b entirely overlaps the first portion 31a, although it will be appreciated the first and second portions 31a, 31b may have different sizes and/or shapes.

Subject to the addition of any additional parts to the blade mould 50, e.g. the additional fibre reinforced composite material in examples in which the spar cap 25 is embedded in the shell of the blade 5, the shell of blade 5 is cured to form an integral structure. Typically, the spar cap 25 is rigidly formed (i.e. cured fibre reinforced composite material) prior to addition to the mould, in which case the reinforcing member 31 is co-bonded to the spar cap 25, although it will be appreciated that the reinforcing member 31 may be co-cured with at least a portion of materials forming the remainder of the blade 5. A blade shell of a suction side 15 of the blade 5 may be formed and attached to the manufactured blade shell of the pressure side 16 described above, with the blade shell of the suction side 15 of the blade 5 absent a reinforcing member 31 extending from a connection point 7 to the respective spar cap 25 of the blade shell.

In an example, the reinforcing member may be provided as a pre-fabricated cured component that is integrated into the blade and attached to the spar cap.

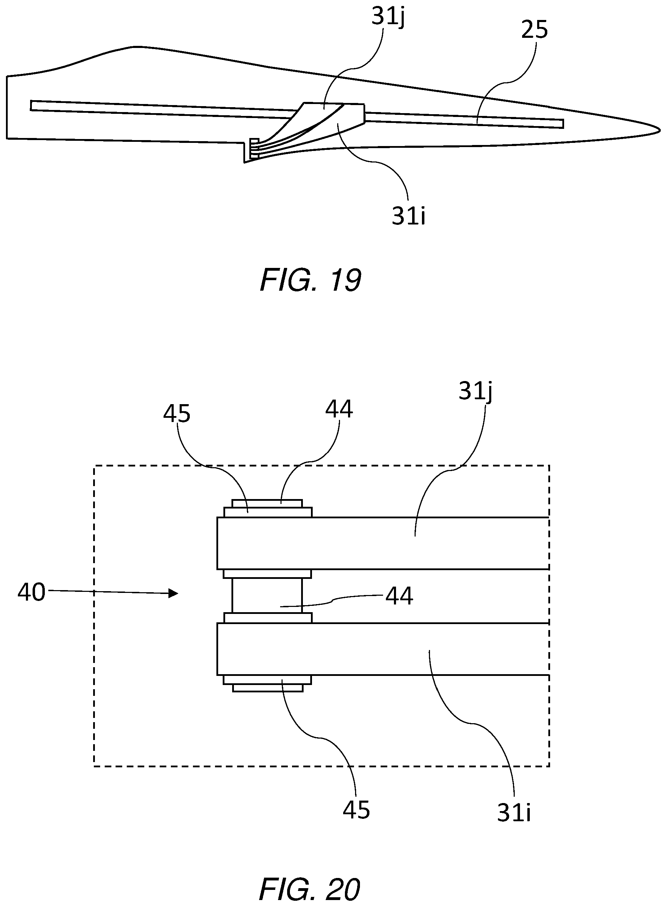

In some examples, the blade 5 may comprise a plurality of reinforcing members 31 at substantially the same spanwise position. Figures 19 and 20 show a first reinforcing member 31i and a second reinforcing member 31j. A common connector 40 may be embedded in the first and second reinforcing members 31i, 31j, such as shown in Figure 20. Alternatively, each of the first and second reinforcing members 31i, 31j may attach to separate connectors 40.

A bushing 45 may be positioned between the coupling element 44 and each of the first and second reinforcing members 31i, 31j, such as shown in Figure 20. Alternatively, a common bushing 45 may extend across the coupling element 44 between the first and second reinforcing members 31i, 31j.

It will be appreciated that the connector 40 may be any suitable element that provides a connection between the reinforcing member 31 and each connecting member 6.

In the example shown in Figures 12 and 13, the reinforcing member 31 extends from a cylindrical coupling element 44 on which a bushing 45 may be mounted so as to provide for relative rotation between the coupling element 44 and the reinforcing member 31, and thereby provide for relative rotation between each connecting member 6 and the reinforcing member 31 about at least one axis.

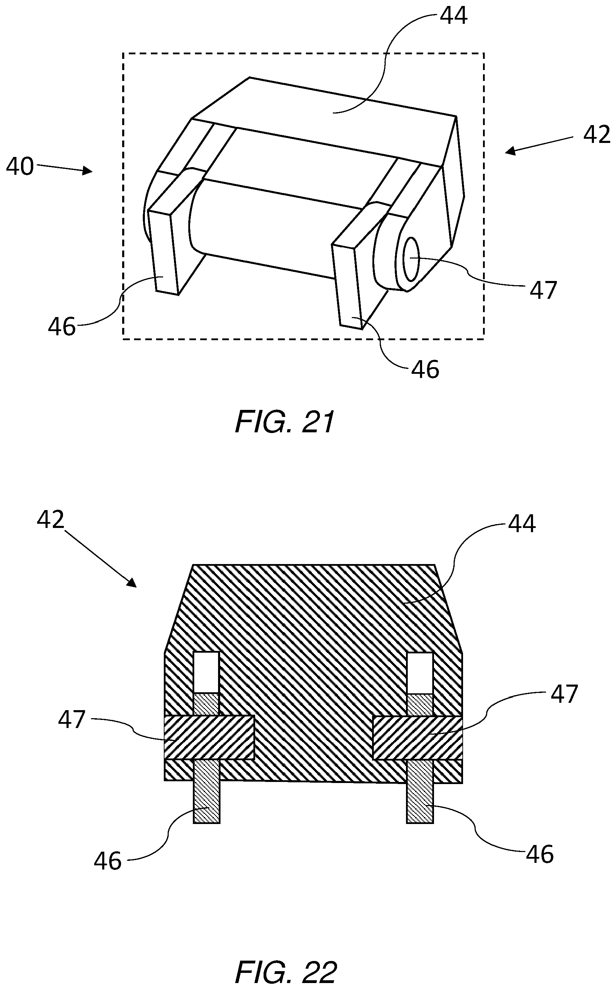

In alternative examples, the coupling element 44 may be fixedly attached to the reinforcing member 31. The portion 40a, 40b of the connector 40 to which the fibre reinforced composite material of the reinforcing member 31 contacts may be semi-cylindrical, with the other of the portions 40a, 40b non-cylindrical. In these examples, relative rotation between each connecting member 6 and the reinforcing member 31 may be provided by a bearing structure 42 including a link 46 rotatable about a pin 47 extending through the coupling element 44, such as shown in Figures 21 and 22. It will be appreciated that the bearing structure 42 may provide a respective pin 47 rotatably coupled to each link 46, or a common pin 47 to which two or more links 46 attach.

Although the invention has been described above with reference to one or more preferred embodiments, it will be appreciated that various changes or modifications may be made without departing from the scope of the invention as defined in the appended claims.

## Claims

1. A pitch controlled wind turbine (1) comprising a tower (2), a nacelle (3) mounted on the tower,
a hub (5) mounted rotatably on the nacelle, and at least three wind turbine blades (4), wherein each wind turbine blade extends between a root end (11) connected to the hub via a pitch mechanism, and a tip end (12);
the wind turbine further comprising at least three blade connecting members (6), each blade connecting member extending from a connection point (7) on one wind turbine blade towards a connection point on a neighbouring wind turbine blade, the connecting points each located at a connection region (10) of a respective blade; and
each wind turbine blade comprising a spar cap (25) extending in a blade spanwise outboard direction between the root end and the tip end, **characterized in that** the wind turbine blade further comprises a reinforcing member (31) having an anchor end (32) and a connection end (33), the connection end having the connection point, the reinforcing member extending continuously from the connection point to the anchor end which overlaps a portion of the spar cap so as to transfer load between the spar cap and the respective connecting member.

2. The pitch controlled wind turbine of claim 1, wherein the anchor end overlaps the portion of the spar cap outboard of the connection point.

3. The pitch controlled wind turbine of claim 1 or 2, wherein the reinforcing member is integral with the spar cap, and preferably the reinforcing member is co-bonded with the spar cap.

4. The pitch controlled wind turbine of any preceding claim, wherein the reinforcing member includes a fibre-reinforced composite material.

5. The pitch controlled wind turbine of claim 4, wherein a majority of the fibres of the fibre-reinforced composite material are oriented generally towards the blade spanwise direction, and preferably the majority of the fibres are oriented within 20 degrees of the spanwise direction of the blade.

6. The pitch controlled wind turbine of claim 4 or 5, wherein the reinforcing member extends around a portion of the connection point, and fibres of the reinforcing member are continuous around the portion of the connection point.

7. The pitch controlled wind turbine of any preceding claim, wherein a width of the reinforcing member in a chordwise direction between a leading edge and a trailing edge of the blade increases outboard from the connection point up to an inboard edge of the anchor end.

8. The pitch controlled wind turbine of any preceding claim, wherein the reinforcing member extends from the connection end and overlaps an inner side of the spar cap and an outer side of the spar cap.

9. The pitch controlled wind turbine of any preceding claim, wherein the spar cap has a longitudinal axis which deviates in a blade thickness direction on either side of the reinforcing member.

10. The pitch controlled wind turbine of any preceding claim, wherein the spar cap is continuous between the root end and the tip end.

11. The pitch controlled wind turbine of any preceding claim, wherein the connection region has a leading edge forward of a leading edge of the blade inboard of the connection region and forward of a leading edge of the blade outboard of the connection region, and preferably wherein the connection point is located forward of the leading edge of the blade inboard of the connection region and forward of the leading edge of the blade outboard of the connection region.

12. The pitch controlled wind turbine of claim 9, wherein the leading edge of the connection region is smoothly blended into the blade leading edge outboard of the connection region.

13. The pitch controlled wind turbine of any preceding claim, wherein the leading edge of the connection point is located on a pressure side of the blade.

14. The pitch controlled wind turbine of any preceding claim, wherein each connection point comprises a connector, and the connector is embedded in the reinforcing member.

15. The pitch controlled wind turbine of any preceding claim, wherein the reinforcing member includes a core material, preferably wherein a thickness of the core material changes between the connection end and the anchor end so as to correspondingly adapt the thickness of the reinforcing member.

16. The pitch controlled wind turbine of claim 15, wherein the thickness of the core material tapers away from the connection end so as to reduce in thickness towards the anchor end.

17. The pitch controlled wind turbine of any preceding claim, wherein each connection point comprises a bearing structure configured to provide freedom of movement of the connecting member about at least one axis.

18. The pitch controlled wind turbine of any preceding claim, wherein a first connecting member and a second connecting member extend from the connection point.

19. The pitch controlled wind turbine according to any preceding claim, wherein the wind turbine is an upwind wind turbine.

20. A method of manufacturing a wind turbine blade (5), comprising:
providing a blade mould (50), the blade mould shaped to form a blade having a connection region (10);
laying a reinforcing member (31) into the blade mould at the connection region;
placing a spar cap (25) into the mould and on top of the reinforcing member
placing a connector (40) into the mould at a connection end (33) of the reinforcing member such that the reinforcing member extends continuously from the connector to an anchor end (32) of the reinforcing member, wherein the anchor end overlaps a portion of the spar cap, and wherein the connector is for coupling to a corresponding connector on a neighbouring wind turbine blade via a connecting member.

21. The method of claim 20, wherein the reinforcing member comprises a first portion and a second portion; the method comprising
placing the spar cap and connector into the mould and onto the first portion, and
folding the second portion of the reinforcing member over the spar cap and connector such that the reinforcing member wraps around the connector with the first and second portions of the reinforcing member placed on opposite sides of the spar cap.

22. The method of claim 21, comprising;
prior to folding the second portion of the reinforcing member over the spar cap and connector, placing a core material onto the first portion of the reinforcing member and folding the second portion of the reinforcing member over the spar cap and connector, wherein the core material extends from the connector towards the spar cap.

## Patentansprüche

1. Windkraftanlage mit Blattwinkelverstellregelung (1), umfassend einen Turm (2), eine auf dem Turm montierte Gondel (3), eine drehbar auf der Gondel montierte Nabe (5) und mindestens drei Windkraftanlagenblätter (4), wobei sich jedes Windkraftanlagenblatt zwischen einem Wurzelende (11), das über einen Pitch-Mechanismus mit der Nabe verbunden ist, und einem Spitzenende (12) erstreckt;
die Windkraftanlage weiter umfassend mindestens drei Blattverbindungselemente (6), wobei sich jedes Blattverbindungselement von einem Verbindungspunkt (7) an einem Windkraftanlagenblatt zu einem Verbindungspunkt an einem benachbarten Windkraftanlagenblatt erstreckt, wobei sich die Verbindungspunkte jeweils in einem Verbindungsbereich (10) des jeweiligen Blattes befinden; und
jedes Windkraftanlagenblatt einen Holmgurt (25) umfasst, der sich in Spannweitenrichtung nach außen zwischen dem Wurzelende und dem Spitzenende erstreckt, **dadurch gekennzeichnet, dass** das Windkraftanlagenblatt weiter ein Verstärkungselement (31) mit einem Ankerende (32) und einem Anschlussende (33) umfasst, wobei das Anschlussende den Verbindungspunkt aufweist, das Verstärkungselement sich kontinuierlich vom Verbindungspunkt bis zum Ankerende erstreckt und einen Teil des Holmgurts überlappt, um die Last zwischen dem Holmgurt und dem jeweiligen Verbindungselement zu übertragen.

2. Windkraftanlage mit Blattwinkelverstellregelung nach Anspruch 1, wobei das Ankerende den Abschnitt des Holmgurts außerhalb des Verbindungspunktes überlappt.

3. Windkraftanlage mit Blattwinkelverstellregelung nach Anspruch 1 oder 2, wobei das Verstärkungselement integral mit dem Holmgurt ist und vorzugsweise mit dem Holmgurt verklebt ist.

4. Windkraftanlage mit Blattwinkelverstellregelung nach einem vorstehenden Anspruch, wobei das Verstärkungselement einen faserverstärkten Kunststoff umfasst.

5. Windkraftanlage mit Blattwinkelverstellregelung nach Anspruch 4, wobei die Mehrheit der Fasern des faserverstärkten Kunststoffs im Allgemeinen in Spannweitenrichtung ausgerichtet ist und vorzugsweise die Mehrheit der Fasern innerhalb von 20 Grad von der Spannweitenrichtung des Blatts ausgerichtet ist.

6. Windkraftanlage mit Blattwinkelverstellregelung nach Anspruch 4 oder 5, wobei sich das Verstärkungselement um einen Abschnitt des Verbindungspunktes erstreckt und die Fasern des Verstärkungselements um den Abschnitt des Verbindungspunktes herum durchgehend sind.

7. Windkraftanlage mit Blattwinkelverstellregelung nach einem vorstehenden Anspruch, wobei die Breite des Verstärkungselements in Schwenkrichtung zwischen einer Blattvorderkante und einer Blatthinterkante vom Verbindungspunkt nach außen bis zu einer inneren Kante des Ankerendes zunimmt.

8. Windkraftanlage mit Blattwinkelverstellregelung nach einem vorstehenden Anspruch, wobei sich das Verstärkungselement vom Anschlussende aus erstreckt und eine Innenseite und eine Außenseite des Holmgurts überlappt.

9. Windkraftanlage mit Blattwinkelverstellregelung nach einem vorstehenden Anspruch, wobei der Holmgurt eine Längsachse aufweist, die auf beiden Seiten des Verstärkungselements in Richtung einer Blattdicke abweicht.

10. Windkraftanlage mit Blattwinkelverstellregelung nach einem vorstehenden Anspruch, wobei der Holmgurt zwischen dem Wurzelende und dem Spitzenende durchgehend ist.

11. Windkraftanlage mit Blattwinkelverstellregelung nach einem vorstehenden Anspruch, wobei der Verbindungsbereich eine Vorderkante aufweist, die vor der Vorderkante des Blatts innerhalb des Verbindungsbereichs und vor einer Blattvorderkante außerhalb des Verbindungsbereichs liegt, und vorzugsweise, wobei der Verbindungspunkt vor der Vorderkante des Blatts innerhalb des Verbindungsbereichs und vor der Vorderkante des Blatts außerhalb des Verbindungsbereichs liegt.

12. Windkraftanlage mit Blattwinkelverstellregelung nach Anspruch 9, wobei die Vorderkante des Verbindungsbereichs außerhalb des Verbindungsbereichs sanft in die Blattvorderkante übergeht.

13. Windkraftanlage mit Blattwinkelverstellregelung nach einem vorstehenden Anspruch, wobei sich die Blattvorderkante des Verbindungspunktes auf der Druckseite befindet.

14. Windkraftanlage mit Blattwinkelverstellregelung nach einem vorstehenden Anspruch, wobei jeder Verbindungspunkt ein Verbindungselement umfasst und das Verbindungselement in das Verstärkungselement eingebettet ist.

15. Windkraftanlage mit Blattwinkelverstellregelung nach einem vorstehenden Anspruch, wobei das Verstärkungselement ein Kernmaterial einschließt, vorzugsweise wobei sich eine Dicke des Kernmaterials zwischen dem Anschlussende und dem Ankerende ändert, um die Dicke des Verstärkungselements entsprechend anzupassen.

16. Windkraftanlage mit Blattwinkelverstellregelung nach Anspruch 15, wobei sich die Dicke des Kernmaterials vom Anschlussende weg verjüngt, sodass die Dicke zum Ankerende hin abnimmt.

17. Windkraftanlage mit Blattwinkelverstellregelung nach einem vorstehenden Anspruch, wobei jeder Verbindungspunkt eine Lagerstruktur umfasst, die so konfiguriert ist, dass sie eine Bewegungsfreiheit des Verbindungselements um mindestens eine Achse ermöglicht.

18. Windkraftanlage mit Blattwinkelverstellregelung nach einem vorstehenden Anspruch, wobei sich von dem Verbindungspunkt ein erstes Verbindungselement und ein zweites Verbindungselement erstrecken.

19. Windkraftanlage mit Blattwinkelverstellregelung nach einem vorstehenden Anspruch, wobei es sich um eine windwärts gelegene Windkraftanlage handelt.

20. Verfahren zum Herstellen eines Windkraftanlagenblatts (5), umfassend:
Bereitstellen einer Blattform (50), wobei die Blattform so geformt ist, dass sie ein Blatt mit einem Verbindungsbereich (10) bildet;
Einlegen eines Verstärkungselements (31) in die Blattform im Verbindungsbereich;
Einsetzen eines Holmgurts (25) in die Form und auf das Verstärkungselement;
Einsetzen eines Verbindungselements (40) an einem Anschlussende (33) des Verstärkungselements in die Form, sodass sich das Verstärkungselement kontinuierlich vom Verbindungselement bis zu einem Ankerende (32) des Verstärkungselements erstreckt, wobei das Ankerende einen Abschnitt des Holmgurts überlappt und wobei das Verbindungselement zur Kopplung mit einem entsprechenden Verbindungselement an einem benachbarten Windkraftanlagenblatt dient.

21. Verfahren nach Anspruch 20, wobei das Verstärkungselement einen ersten und einen zweiten Abschnitt umfasst; das Verfahren umfassend
Einsetzen des Holmgurts und des Verbindungselements in die Form und auf den ersten Abschnitt, und
Falten des zweiten Abschnitts des Verstärkungselements über den Holmgurt und das Verbindungselement, sodass sich das Verstärkungselement um das Verbindungselement wickelt, wobei der erste und der zweite Abschnitt des Verstärkungselements auf gegenüberliegenden Seiten des Holmgurts angeordnet sind.

22. Verfahren nach Anspruch 21, umfassend:
vor dem Falten des zweiten Abschnitts des Verstärkungselements über den Holmgurt und das Verbindungselement, Aufsetzen eines Kernmaterials auf den ersten Abschnitt des Verstärkungselements und Falten des zweiten Abschnitts des Verstärkungselements über den Holmgurt und das Verbindungselement, wobei sich das Kernmaterial vom Verbindungselement in Richtung Holmgurt erstreckt.

## Revendications

1. Éolienne à commande d'actionneur de calage (1) comprenant une tour (2), une nacelle (3) montée sur la tour, un moyeu (5) monté de manière rotative sur la nacelle et au moins trois pales (4) d'éolienne, dans laquelle chaque pale d'éolienne s'étend entre une extrémité de pied (11) reliée au moyeu par l'intermédiaire d'un mécanisme de calage et une extrémité de pale (12) ;
l'éolienne comprenant en outre au moins trois éléments de connexion (6) de pale, chaque élément de connexion de pale s'étendant d'un point de connexion (7) sur une pale d'éolienne vers un point de connexion sur une pale d'éolienne voisine, les points de connexion étant chacun situés dans une zone de connexion (10) d'une pale respective ; et
chaque pale d'éolienne comprenant un raidisseur de longeron (25) s'étendant dans le sens extérieur de l'envergure de pale entre l'extrémité de pied et l'extrémité de pale, **caractérisée en ce que** la pale d'éolienne comprend en outre un élément de renforcement (31) présentant une extrémité d'ancrage (32) et une extrémité de connexion (33), l'extrémité de connexion présentant le point de connexion, l'élément de renforcement s'étendant en continu du point de connexion à l'extrémité d'ancrage qui chevauche une partie du raidisseur de longeron afin de transférer une charge entre le raidisseur de longeron et l'élément de connexion respectif.

2. Éolienne à commande d'actionneur de calage selon la revendication 1, dans laquelle l'extrémité d'ancrage chevauche la partie du raidisseur de longeron à l'extérieur du point de connexion.

3. Éolienne à commande d'actionneur de calage selon la revendication 1 ou 2, dans laquelle l'élément de renforcement est solidaire du raidisseur de longeron, et de préférence l'élément de renforcement est co-lié au raidisseur de longeron.

4. Éolienne à commande d'actionneur de calage selon une quelconque revendication précédente, dans laquelle l'élément de renforcement inclut un matériau composite renforcé par des fibres.

5. Éolienne à commande d'actionneur de calage selon la revendication 4, dans laquelle une majorité des fibres du matériau composite renforcé par des fibres sont orientées généralement vers le sens de l'envergure de pale, et de préférence la majorité des fibres sont orientées à moins de 20 degrés du sens de l'envergure de la pale.

6. Éolienne à commande d'actionneur de calage selon la revendication 4 ou 5, dans laquelle l'élément de renforcement s'étend autour d'une partie du point de connexion, et les fibres de l'élément de renforcement sont continues autour de la partie du point de connexion.

7. Éolienne à commande d'actionneur de calage selon une quelconque revendication précédente, dans laquelle une largeur de l'élément de renforcement dans le sens de la corde entre un bord d'attaque et un bord de fuite de la pale augmente vers l'extérieur, du point de connexion jusqu'à un bord intérieur de l'extrémité d'ancrage.

8. Éolienne à commande d'actionneur de calage selon une quelconque revendication précédente, dans laquelle l'élément de renforcement s'étend depuis l'extrémité de connexion et chevauche un côté intérieur du raidisseur de longeron et un côté extérieur du raidisseur de longeron.

9. Éolienne à commande d'actionneur de calage selon une quelconque revendication précédente, dans laquelle le raidisseur de longeron présente un axe longitudinal qui dévie dans le sens de l'épaisseur de pale de part et d'autre de l'élément de renforcement.

10. Éolienne à commande d'actionneur de calage selon une quelconque revendication précédente, dans laquelle le raidisseur de longeron est continu entre l'extrémité de pied et l'extrémité de pale.

11. Éolienne à commande d'actionneur de calage selon une quelconque revendication précédente, dans laquelle la zone de connexion présente un bord d'attaque situé en avant du bord d'attaque de la pale à l'intérieur de la zone de connexion et en avant d'un bord d'attaque de la pale à l'extérieur de la zone de connexion, et de préférence dans laquelle le point de connexion est situé en avant du bord d'attaque de la pale à l'intérieur de la zone de connexion et en avant du bord d'attaque de la pale à l'extérieur de la zone de connexion.

12. Éolienne à commande d'actionneur de calage selon la revendication 9, dans laquelle le bord d'attaque de la zone de connexion s'intègre en douceur dans le bord d'attaque de pale à l'extérieur de la zone de connexion.

13. Éolienne à commande d'actionneur de calage selon une quelconque revendication précédente, dans laquelle le bord d'attaque du point de connexion est situé du côté intrados de la pale.

14. Éolienne à commande d'actionneur de calage selon une quelconque revendication précédente, dans laquelle chaque point de connexion comprend un raccord, et le raccord est intégré dans l'élément de renforcement.

15. Éolienne à commande d'actionneur de calage selon une quelconque revendication précédente, dans laquelle l'élément de renforcement inclut un matériau d'âme, de préférence dans laquelle une épaisseur du matériau d'âme varie entre l'extrémité de connexion et l'extrémité d'ancrage afin d'adapter en conséquence l'épaisseur de l'élément de renforcement.

16. Éolienne à commande d'actionneur de calage selon la revendication 15, dans laquelle l'épaisseur du matériau d'âme s'amincit à partir de l'extrémité de connexion de manière à perdre en épaisseur en direction de l'extrémité d'ancrage.

17. Éolienne à commande d'actionneur de calage selon une quelconque revendication précédente, dans laquelle chaque point de connexion comprend une structure de palier configurée pour assurer la liberté de mouvement de l'élément de connexion autour d'au moins un axe.

18. Éolienne à commande d'actionneur de calage selon une quelconque revendication précédente, dans laquelle un premier élément de connexion et un second élément de connexion s'étendent à partir du point de connexion.

19. Éolienne à commande d'actionneur de calage selon une quelconque revendication précédente, dans laquelle l'éolienne est une éolienne face au vent.

20. Procédé de fabrication d'une pale (5) d'éolienne, comprenant :
la fourniture d'un moule (50) pour pale, le moule pour pale étant façonné pour former une pale présentant une zone de connexion (10) ;
l'insertion d'un élément de renforcement (31) dans le moule pour pale au niveau de la zone de connexion ;
le placement d'un raidisseur de longeron (25) dans le moule et sur l'élément de renforcement ;
le placement d'un raccord (40) dans le moule à une extrémité de connexion (33) de l'élément de renforcement de sorte que l'élément de renforcement s'étende en continu du raccord à une extrémité d'ancrage (32) de l'élément de renforcement, dans lequel l'extrémité d'ancrage chevauche une partie du raidisseur de longeron, et dans lequel le raccord est destiné à se coupler à un raccord correspondant sur une pale d'éolienne voisine via un élément de connexion.

21. Procédé selon la revendication 20, dans lequel l'élément de renforcement comprend une première partie et une seconde partie ; le procédé comprenant
le placement du raidisseur de longeron et du raccord dans le moule et sur la première partie, et
le pliage de la seconde partie de l'élément de renforcement sur le raidisseur de longeron et le raccord de sorte que l'élément de renforcement s'enroule autour du raccord, les première et seconde parties de l'élément de renforcement étant placées de part et d'autre du raidisseur de longeron.

22. Procédé selon la revendication 21, comprenant ;
avant de plier la seconde partie de l'élément de renforcement sur le raidisseur de longeron et le raccord, le placement d'un matériau d'âme sur la première partie de l'élément de renforcement et le pliage de la seconde partie de l'élément de renforcement sur le raidisseur de longeron et le raccord, dans lequel le matériau d'âme s'étend du raccord vers le raidisseur de longeron.
